# EUROPÄISCHE PATENTSCHRIFT

(11) **EP 3 146 535 B1**
(45) Veröffentlichungstag und Bekanntmachung des Hinweises auf die Patenterteilung: **18.11.2020**
(21) Anmeldenummer: 15722185.4
(22) Anmeldetag: 12.05.2015
(51) Int. Cl.: H01B 17/30, H02K 5/22

(54) **LEITUNGSDURCHFÜHRUNG**
CABLE BUSHING
PASSAGE POUR CONDUITES

(30) Priorität: 20.05.2014 DE 102014209517
(43) Veröffentlichungstag der Anmeldung: 29.03.2017
(73) Patentinhaber: KSB SE & Co. KGaA, 67227 Frankenthal (DE)
(72) Erfinder: BRUHNS, Uwe, 67227 Frankenthal (DE); DANIEL, Melanie, 67227 Frankenthal (DE); KÖHLER, Bernd, 67227 Frankenthal (DE); MEYER, Robert, 67227 Frankenthal (DE)
(86) Internationale Anmeldenummer: PCT/EP2015/060406
(87) Internationale Veröffentlichungsnummer: WO 2015/176991

(56) Entgegenhaltungen:
- DE-A1- 3 100 863
- GB-A- 1 076 936
- GB-A- 2 003 334
- JP-A- S6 271 451
- JP-A- S60 234 444
- JP-U- S5 515 968
- JP-U- S6 281 455
- US-A- 3 043 903
- US-A1- 2005 218 733

## Beschreibung

Die Erfindung betrifft eine Vorrichtung mit einer Pumpe, die von einem Nassläufermotor angetrieben wird und ein Gehäuse aufweist, das eine Durchführungsanordnung zur Stromversorgung des Nassläufermotors umfasst, wobei die Durchführungsanordnung ein Leitungselement und einen einstückig ausgebildeten Isolierkörper aufweist und ein Halteelement umfasst.

Solche Vorrichtungen werden beispielsweise im Reaktordruckgefäß eines Siedewasserreaktors eingesetzt, wobei eine Einsteckpumpe für die Umwälzung des Kühlmittels ohne externe Rohrleitungen sorgt. Die Gehäuseteile bilden die Druckhülle, die einen Innenraum gegenüber einer umgebenden Atmosphäre begrenzt. Die Drückhülle ist meist für einen sehr hohen Systemdruck ausgelegt.

In der EP 1 910 685 B1 wird eine solche Vorrichtung beschrieben. Die Vorrichtung umfasst eine Pumpe, die von einem flüssigkeitsgefüllten Motor angetrieben wird. Der Motor weist ein Gehäuse auf, welches Teil der Druckhülle ist.

Die Erfindung betrifft eine Vorrichtung mit einer Pumpe, die von einem Nassläufermotor angetrieben wird. Bei Nassläufermotoren unterscheidet man Ausführungen mit trockener und nasser Wicklung des Stators. Bei einer trockenen Wicklung des Stators spricht man von einem Spaltrohrmotor. Bei einer nassen Wicklung des Stators spricht man von einem nassen Motor. Der nasse Motor ist vollständig mit Flüssigkeit gefüllt. Mit dem Läufer und seiner Lagerung liegen auch der Stator und die Wicklung einschließlich der Zuleitungsanschlüsse in der Flüssigkeit. Voraussetzung ist eine wasserfeste und druckdichte Isolation aller spannungsführenden Teile. Der nasse Motor wird insbesondere als Antriebmotor für stopfbuchslose Umwälzpumpen in Kraftwerken eingesetzt.

In der DE 31 00 863 A1 wird eine Abdichtung für eine Leitungsdurchführung zu einem druckbeaufschlagten Raum beschrieben, in dem ein Elektromotor zum Antrieb einer stopfbuchslosen Umwälzpumpe angeordnet ist. Dabei werden ein als Leiteranschlussbolzen ausgeführtes Leitungselement und ein Isolierkörper gegeneinander verspannt. Die Durchführungsanordnung umfasst zwei Isolierkörper, einen äußeren Isolationskörper aus Keramik und einen inneren Isolationskörper aus Hartgummi.

Die DE 31 03 299 A1 beschreibt eine Vorrichtung mit einer stopfbuchslosen Umwälzpumpe, die von einem Elektromotor angetrieben wird. Das als Druckhülle ausgebildete Gehäuse weist eine Durchführungsanordnung zur Stromversorgung des Motors auf. Die Durchführungsanordnung umfasst ein als Leiteranschlussbolzen ausgebildetes Leitungselement und zwei Isolierkörper, einen inneren Keramikisolierkörper und einen äußeren isolierenden Stützkörper.

Bei diesen herkömmlichen Durchführungsanordnungen zur Stromversorgung von Nassläufermotoren ist die Isolierung zweiteilig aufgebaut. Sie besteht aus einem inneren Isolierkörper und einem äußeren Isolierkörper. Der innere Isolierkörper ist der drucktragende Teil. Über den inneren Isolierkörper wird ein äußerer Isolierkörper angeordnet. Im Zusammenspiel benötigen beide Isolierkörper eine sehr lange Überdeckung, um die notwendigen Kriechstrecken zu erreichen. Dies vergrößert den Bauraum. Bei hohen Belastungen werden zur Absicherung Metallringe verwendet. Diese erfordern weitere Dichtstellen und können sich durch Wirbelströme erwärmen.

Aus der US 3,043,903 A ist eine Durchführungsanordnung bekannt, die einen einzigen, einen Stromleiter umschließenden Isolierkörper aufweist.

Die JP S55 15968 U beschreibt ein an ein Kabel 7 angebrachtes Isolationselement, das durch eine Kabeldurchführungsöffnung eines elektrischen Gerätehauptkörpers geführt ist. Ein flanschartiger Vorsprung ist in einem Abschnitt des Isolationselements ausgebildet, der an einer in dem Gerätehauptkörper ausgebildeten Schulter anliegt und mittels einer Befestigungshülse fixiert wird.

In der GB 2 003 334 A wird eine Klemmleiste mit einem relativ hohen Wärmeausdehnungskoeffizienten beschrieben, die mittels eines Ringes mit einem relativ niedrigen Wärmeausdehnungskoeffizienten an einem Gehäuse eines elektrischen Gerätes befestigt wird.

Aufgabe der Erfindung ist es eine Vorrichtung mit einer von einem Nassläufermotor angetriebenen Pumpe bereitzustellen, die ein hohes Maß an Sicherheit gewährleistet und einen möglichst geringen Bauraum einnimmt. Dabei sollen möglichst wenige Dichtstellen erforderlich sein.

Diese Aufgabe wird erfindungsgemäß durch eine Vorrichtung mit den Merkmalen des Anspruchs 1 gelöst. Bevorzugte Varianten sind in den Unteransprüchen ausgeführt.

Erfindungsgemäß umfasst die Durchführungsanordnung mindestens ein zwischen dem Halteelement und dem Gehäuse angeordnetes Kraftübertragungselement, auf welches das durch Befestigungselemente am Gehäuse festgelegte Halteelement eine Kraft ausübt, die das Kraftübertragungselement auf das Gehäuse und/oder den Isolierkörper überträgt, wobei das Kraftübertragungselement vollständig in dem Isolierkörper integriert ist und zur Bildung einer mechanischen Verstärkung aus einem hochfesten in einer Matrix eingebetteten Faserwerkstoff besteht.

Vorzugsweise handelt es sich bei dem Kraftübertragungselement um ein mechanisches Verstärkungselement aus einem elektrisch nicht leitenden und/oder nicht magnetischen Material. Dadurch werden Wirbelstromverluste und damit verbundene Erwärmungen vermieden.

Das Halteelement wirkt auf das Kraftübertragungselement und drückt dieses in Richtung des Gehäuses.

Der Isolierkörper umgibt das Leitungselement, welches den Nassläufermotor mit Strom versorgt. Das Kraftübertragungselement steht mit dem Isolierkörper in Wirkverbindung und sorgt für eine Fixierung des Isolierkörpers am Gehäuse.

Die erfindungsgemäße Vorrichtung ermöglicht eine Aufgabentrennung zwischen Isolierung und Kraftübertragung, so dass bei der erfindungsgemäßen Vorrichtung nur ein Isolierkörper erforderlich ist. Dadurch wird der Bauraum deutlich verkleinert. Zudem werden die erforderlichen Dichtflächen reduziert und Sekundärdichtungen vermieden.

Bevorzugt weist das Leitungselement eine Verdickung an dem zur Innenseite des Gehäuses gerichteten Ende auf. Dabei erweist es sich als günstig, wenn der Isolierkörper zwischen dem Befestigungselement und der Verdickung des Leitungselements verspannt ist. Bei einer besonders vorteilhaften Ausführung der Erfindung ist die Verdickung kegelstumpfförmig ausgebildet.

Das Kraftübertragungselement wird gegen das Gehäuse gedrückt. Dadurch wird der Isolierkörper in der Durchführungsanordnung fixiert. Das Kraftübertragungselement und der Isolierkörper stehen in Wirkverbindung miteinander.

Bei einer Variante der Erfindung weist das Kraftübertragungselement einen Bereich auf, der in eine Durchführungsöffnung im Gehäuse hineinragt. Das Kraftübertragungselement weist in diesem Bereich einen Außendurchmesser auf, der etwas kleiner ist als der Innendurchmesser der Öffnung im Gehäuse. Vorzugsweise sind in dem Bereich zwischen dem Kraftübertragungselement und dem Motorgehäuse Dichtelemente angeordnet.

Bei einer Variante der Erfindung weist das Kraftübertragungselement einen Bereich auf, der einen Anschlag zu der Durchführungsöffnung im Gehäuse bildet. Vorzugsweise weist dabei das Kraftübertragungselement sowohl einen Bereich auf der in die Durchführungsöffnung im Gehäuse hineinragt, als auch einen Bereich der außerhalb der Durchführungsöffnung angeordnet ist.

Das Kraftübertragungselement ist ringartig ausgebildet und umschließt einen Bereich zur Durchführung des Leitungselements. Vorzugsweise ist der kleinste Innendurchmesser dieses Bereichs kleiner als der größte Außendurchmesser der Verdickung des Leitungselements. Kommt es zu einem Bruch des Isolierkörpers, wird das Leitungselement durch den hohen Druck im Motorgehäuse nach "außen" gedrückt. Das Kraftübertragungselement bildet bei dieser Variante einen Anschlag für die Verdickung des Leitungselements. Diese Konstruktion sichert das Leitungselement gegen geschossartiges Austreten aus dem Gehäuse und verhindert eine massive Leckage entlang des Leitungselements. Vorzugsweise wird im Normalzustand durch Dichtelemente eine Leckage verhindert.

Bei einer Variante der Erfindung ist das ringförmige Kraftübertragungselement kegelstumpfförmig ausgebildet und weist in der Mitte eine Öffnung auf. Die Grundfläche des ringartigen kegelstumpfförmigen Kraftübertragungselements weist zum Gehäuse. Die Deckfläche weist zur Außenseite. Die Mantelfläche weist zum Halteelement. Werden die Befestigungselemente am Halteelement angezogen, so wirkt das Halteelement auf die Mantelfläche des Kraftübertragungselements.

Das Halteelement weist vorzugsweise eine mittige kegelstumpfförmige Öffnung auf. Die schrägen Innenflächen des Halteelements wirken auf die schrägen Außenflächen des Kraftübertragungselements. Das Haltelement verspannt das Kraftübertragungselement gegen das Gehäuse.

Weitere Vorteile und Merkmale der Erfindung ergeben sich aus der Beschreibung von Ausführungsbeispielen anhand von Zeichnungen und aus den Zeichnungen selbst.

Dabei zeigt
- Figur 1: einen Schnitt durch ein Motor-Pumpen-Aggregat
- Figur 2: eine perspektivische Schnittdarstellung einer Durchführungsanordnung im Gehäuse des Motors,
- Figur 3: eine Vergrößerung eines Ausschnitts der Variante gemäß Figur 2,
- Figur 4: eine Variante mit einem Kraftübertragungselement, das in eine Durchführungsöffnung im Gehäuse hineinragt,
- Figur 5: eine Variante mit einem scheibenförmigen Kraftübertragungselement.

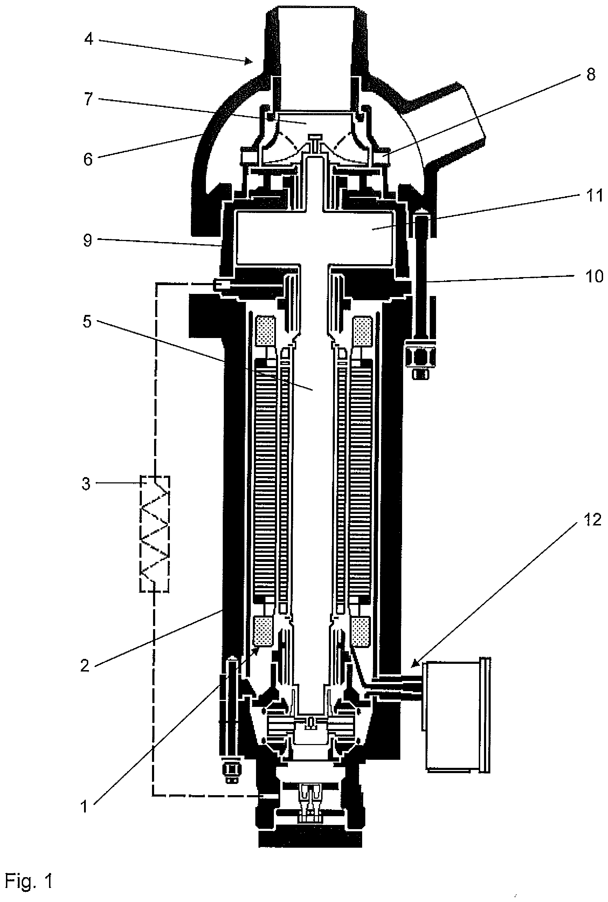

Figur 1 zeigt eine als Motor-Pumpenaggregat ausgebildete Vorrichtung mit einem Nassläufermotor 1. Ein Motorgehäuse 2 bildet einen Teil der Druckhülle. Das Innere des Nassläufermotors 1 ist mit Flüssigkeit gefüllt. Zur Abfuhr der elektrischen Verlustleistung ist ein Kühlsystem 3 vorhanden. Der Nassläufermotor 1 umfasst Radial- und Axiallager.

Die Antriebskraft des Motors 1 wirkt auf einen Wellenstrang 5 und überträgt damit ein Drehmoment auf eine Pumpe 4. Die Pumpe 4 umfasst ein Pumpengehäuse 6, in dem ein Laufrad 7 und eine Leiteinrichtung 8 angeordnet sind. Das Pumpengehäuse 6 ist durch ein Deckelement 9 verschlossen und über wenigstens einen Zuganker 10 mit dem Motorgehäuse 2 verbunden.

Innerhalb des im Ausführungsbeispiel mehrteilig ausgebildeten Deckelements 9 befindet sich ein Schwungrad 11, dessen Trägheitsmoment bei einem Stromausfall für eine weitere Rotation des Wellenstrangs 5 sorgt.

Das Motorgehäuse 2 und das Pumpengehäuse 6 bilden gemeinsam mit dem Deckelement 9 die Druckhülle. Diese ist für einen hohen Systemdruck ausgelegt. Im Ausführungsbeispiel ist das Aggregat für eine Antriebsleistung größer als 600 kW ausgelegt. Im Ausführungsbeispiel ist der Nassläufermotor 1 als nasser Motor ausgebildet. Der Nassläufermotor 1 ist vollständig mit Flüssigkeit gefüllt. Mit dem Läufer und seiner Lagerung liegen auch der Stator und die Wicklung einschließlich der Zuleitungsanschlüsse in der Flüssigkeit. Zur Stromversorgung des Nassläufermotors 1 ist im Motorgehäuse 2 eine Durchführungsanordnung 12 vorgesehen.

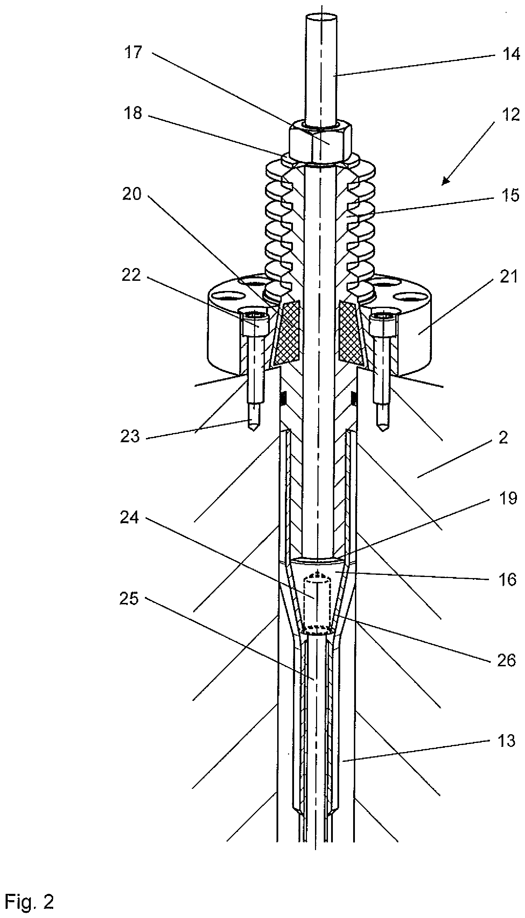

Figur 2 zeigt eine perspektivische Schnittdarstellung einer Durchführungsanordnung 12. Das Motorgehäuse 2 weist dazu eine Durchführungsöffnung 13 auf. Die Durchführungsöffnung 13 ist als Bohrung in das Motorgehäuse 2 eingebracht.

Ein Leitungselement 14 dient der Stromversorgung des Nassläufermotors 1. Im Ausführungsbeispiel ist das Leitungselement 14 als zylinderförmiger Bolzen ausgebildet.

Ein Isolierkörper 15 trennt das Leitungselement 14 von dem Motorgehäuse 2. Das Leitungselement 14 weist eine Verdickung 16 auf. Die Verdickung 16 ist kegelstumpfartig ausgebildet und weist mit der Deckfläche zur Innenseite. An die Grundfläche der kegelstumpfförmigen Verdickung 16 schließt sich ein zylinderförmiger Abschnitt des Leitungselements 14 an.

Mittels eines als Schraubenmutter ausgeführten Bauteils 17 werden das Leitungselement 14 und der Isolierkörper 15 gegeneinander verspannt. Dazu weist das Leitungselement 14 ein Außengewinde auf, auf das das Bauteil 17 aufgeschraubt ist. Durch Anziehen des Bauteils 17 wird über eine Scheibe 18 eine Kraft auf den Isolierkörper 13 ausgeübt und presst diesen gegen die Verdickung 16 des Leitungselements 14.

Der Isolierkörper 15 liegt an einer Anlagefläche 19 des Leitungselements 14 an, die durch die Verdickung 16 des Leitungselements 15 gebildet wird.

Erfindungsgemäß weist die Durchführungsanordnung 12 ein Kraftübertragungselement 20 auf. Im Ausführungsbeispiel gemäß Figur 1 ist das Kraftübertragungselement 20 als ringförmiger Kegelstumpfkörper ausgebildet. Bei der Variante gemäß Figur 2 ist das Kraftübertragungselement 20 vollständig in dem Isolierkörper 15 integriert.

Die Durchführungsanordnung 12 umfasst ein Halteelement 21, das durch Befestigungselemente 22, welche als Schrauben ausgebildet sind, am Motorgehäuse 2 festgelegt ist. Das Halteelement 21 ist als ringförmige Scheibe mit einer kegelstumpfförmigen mittleren Öffnung ausgebildet. Entlang des Umfangs des scheibenartigen Halteelements 21 sind Bohrungen eingebracht, in welchen die Befestigungselemente 22 angeordnet sind. Im Motorgehäuse 2 sind Bohrungen 23 eingebracht, die ein Innengewinde aufweisen. Die Befestigungselemente 22 weisen ein korrespondierendes Außengewinde auf. Durch Anziehen der Befestigungselemente 22 wird das Halteelement 21 am Motorgehäuse 2 festgelegt. Erfindungsgemäß übt das Halteelement 21 eine Kraft auf das Kraftübertragungselement 20 aus, die vom Kraftübertragungselement 20 auf das Motorgehäuse 2 und/oder den Isolierkörper 15 übertragen wird.

Das Leitungselement 14 weist im Bereich der Verdickung 16 eine Öffnung 24 auf. In dieser Öffnung 24 ist ein Leiter 25 des Nassläufermotors 1 angeordnet. Das Leitungselement 14 und der Leiter 25 sind von einer Isolierung 26 umgeben, die im Ausführungsbeispiel als Schrumpfschlauch und/oder Isolierband ausgeführt ist. Bei dem Leiter 25 handelt es sich um ein stromführendes Kabel aus der Wicklung des Nassläufermotors 1.

Im Ausführungsbeispiel ist der Isolierkörper 15 einteilig ausgeführt und besitzt ein integrales Kraftübertragungselement 20. Bei dem Kraftübertragungselement 20 handelt es sich um eine mechanische Verstärkung, die eine Krafteinleitung in die Druckhülle bewirkt.

Der Innendurchmesser des ringförmigen Kraftübertragungselements 20 ist kleiner als der Außendurchmesser der Verdickung 16 des Leitungselement 14. Kommt es zu einem Bruch des Isolierkörpers 15, wird das Leitungselement 14 gegen geschossartiges Austreten aus dem Motorgehäuse 2 durch das Kraftübertragungselement 20 gesichert, dadurch wird eine massive Leckage verhindert.

Das Kraftübertragungselement 20 kann aus einem hochfesten Faserwerkstoff bestehen, der in eine Matrix eingebettet ist. Auf diese Weise wird eine mechanische Verstärkung gebildet.

Bei der in Figur 2 dargestellten Variante wird das Kraftübertragungselement 20 als Einsatzring bei der Herstellung des Isolierkörpers 15 eingelegt und danach ggf. umspritzt. Alternativ kann das Kraftübertragungselement 20 nach Herstellung des eigentlichen Isolierkörpers durch Wickeln und/oder Kleben in einen dafür vorgesehen Raum eingebracht werden.

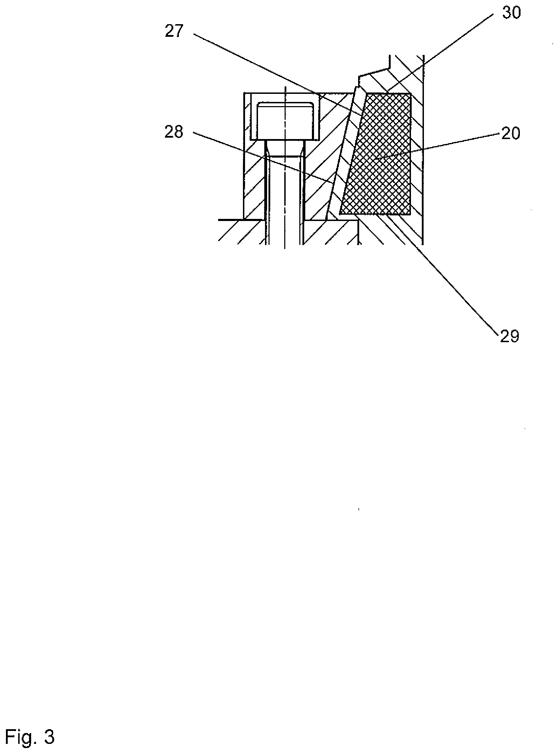

Figur 3 zeigt einen Ausschnitt, der in Figur 2 dargestellten Variante. Das ringförmige Kraftübertragungselement 20 weist eine äußere Mantelfläche 27 auf, die parallel zu einer Fläche 28 der inneren Öffnung des Halteelements 21 verläuft. Bei der Fläche 28 handelt es sich um eine innere Kegelfläche des Halteelements 21.

Weiterhin weist das ringartige Kraftübertragungselement 20 eine stirnseitige Fläche 29 auf, die zum Motorgehäuse 2 bzw. zur Durchführungsöffnung 13 gerichtet ist. Weiterhin weist das Kraftübertragungselement 20 eine stirnseitige Fläche 30 auf, die nach außen bzw. zum Bauteil 17 gerichtet ist.

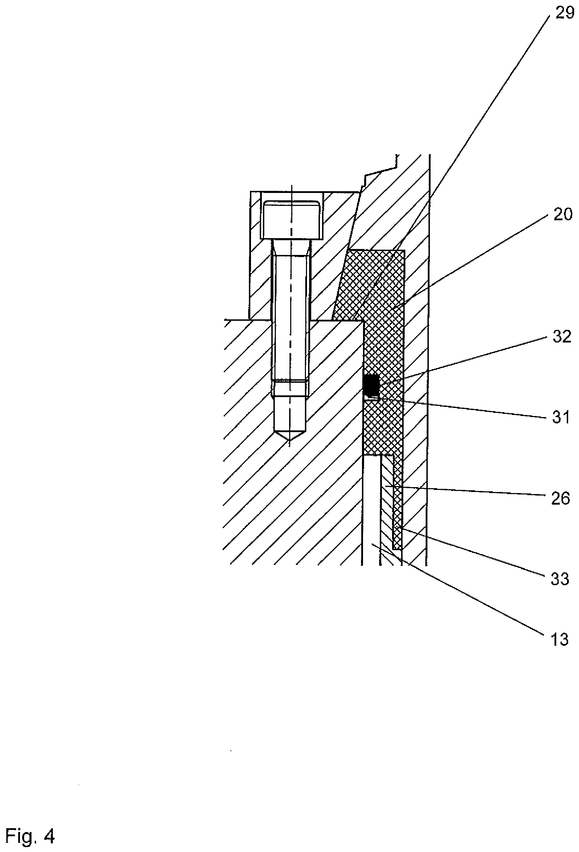

Figur 4 zeigt eine Variante, die nicht Gegenstand der beanspruchten Erfindung ist, bei der das Kraftübertragungselement 20 in die Durchführungsöffnung 13 zumindest teilweise hineinragt. Dabei weist das Kraftübertragungselement 20 eine umlaufende Nut 31 auf, in der ein ringförmiges Dichtelement 32 angeordnet ist. Das Kraftübertragungselement 20 weist eine Verlängerung 33, die von einer Isolierungsschicht 26 umgeben ist. Die Verlängerung 33 ist hülsenförmig ausgebildet.

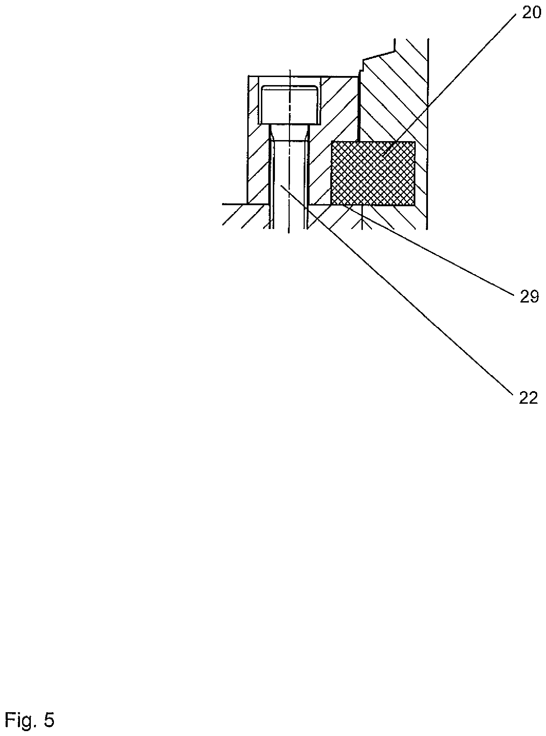

Figur 5 zeigt eine Variante, die nicht Gegenstand der beanspruchten Erfindung ist, bei der das Kraftübertragungselement 20 als ringförmige zylindrische Scheibe bzw. als Hülse ausgebildet ist.

## Patentansprüche

1. Vorrichtung mit einer Pumpe (4), die von einem Nassläufermotor (1) angetrieben wird und ein Gehäuse (2) aufweist, das eine Durchführungsanordnung (12) zur Stromversorgung des Nassläufermotors (1) umfasst, wobei die Durchführungsanordnung (12) ein Leitungselement (14) und einen einstückig ausgebildeten Isolierkörper (15) aufweist und ein Halteelement (21) umfasst,
**dadurch gekennzeichnet, dass**
die Durchführungsanordnung (12) mindestens ein zwischen dem Halteelement (21) und dem Gehäuse (2) angeordnetes Kraftübertragungselement (20) umfasst, auf welches das durch Befestigungselemente (22) am Gehäuse (2) festgelegte Halteelement (21) eine Kraft ausübt, die das Kraftübertragungselement (20) auf das Gehäuse (2) und/oder den Isolierkörper (15) überträgt, wobei das Kraftübertragungselement (20) vollständig in dem Isolierkörper (15) integriert ist und zur Bildung einer mechanischen Verstärkung aus einem hochfesten in einer Matrix eingebetteten Faserwerkstoff besteht.

2. Vorrichtung nach Anspruch 1, **dadurch gekennzeichnet, dass** das Halteelement (21) eine kegelstumpfförmige Öffnung aufweist.

3. Vorrichtung nach einem der Ansprüche 1 oder 2, **dadurch gekennzeichnet, dass** der Isolierkörper (15) zwischen einem Bauteil (17) und einer Verdickung (16) des Leitungselements (14) angeordnet ist.

4. Vorrichtung nach einem der Ansprüche 1 bis 3, **dadurch gekennzeichnet, dass** das Kraftübertragungselement (20) einen Bereich aufweist, der in eine Durchführungsöffnung (13) im Gehäuse (2) hineinragt.

5. Vorrichtung nach einem der Ansprüche 1 bis 4, **dadurch gekennzeichnet, dass** das Kraftübertragungselement (20) einen Bereich (29) aufweist, der einen Anschlag zu einer Durchführungsöffnung (13) im Gehäuse (2) bildet.

6. Vorrichtung nach einem der Ansprüche 1 bis 5, **dadurch gekennzeichnet, dass** das Kraftübertragungselement (20) einen Bereich zur Durchführung des Leitungselements (14) umschließt.

7. Vorrichtung nach einem der Ansprüche 1 bis 6, **dadurch gekennzeichnet, dass** das Kraftübertragungselement (20) eine innere Öffnung aufweist, die kleiner ist als eine Verdickung (16) des Leitungselements (14).

8. Vorrichtung nach einem der Ansprüche 1 bis 7, **dadurch gekennzeichnet, dass** das Kraftübertragungselement (20) kegelstumpfförmig ausgebildet ist.

## Claims

1. Apparatus comprising a pump (4) which is driven by a wet-rotor motor (1) and has a casing (2) which comprises a bushing arrangement (12) for supplying power to the wet-rotor motor (1), wherein the bushing arrangement (12) has a line element (14) and an integrally formed insulating body (15) and comprises a holding element (21),
**characterized in that**
the bushing arrangement (12) comprises at least one force-transmitting element (20) which is arranged between the holding element (21) and the casing (2) and on which the holding element (21), which is secured to the casing (2) by fastening elements (22), exerts a force which the force-transmitting element (20) transmits to the casing (2) and/or the insulating body (15), wherein the force-transmitting element (20) is fully integrated in the insulating body (15) and, for the purpose of forming a mechanical reinforcement, consists of a high-strength fibre material which is embedded in a matrix.

2. Apparatus according to Claim 1, **characterized in that** the holding element (21) has a truncated cone-shaped opening.

3. Apparatus according to either of Claims 1 and 2, **characterized in that** the insulating body (15) is arranged between a component (17) and a thickened portion (16) of the line element (14).

4. Apparatus according to one of Claims 1 to 3, **characterized in that** the force-transmitting element (20) has a region which projects into a bushing opening (13) in the casing (2).

5. Apparatus according to one of Claims 1 to 4, **characterized in that** the force-transmitting element (20) has a region (29) which forms a stop to a bushing opening (13) in the casing (2).

6. Apparatus according to one of Claims 1 to 5, **characterized in that** the force-transmitting element (20) encloses a region for passage of the line element (14).

7. Apparatus according to one of Claims 1 to 6, **characterized in that** the force-transmitting element (20) has an inner opening which is smaller than a thickened portion (16) of the line element (14).

8. Apparatus according to one of Claims 1 to 7, **characterized in that** the force-transmitting element (20) is of truncated cone-shaped design.

## Revendications

1. Dispositif muni d'une pompe (4), qui est entraînée par un moteur à rotor noyé (1) et comporte un boîtier (2), qui comprend un agencement de passage (12) pour alimenter en courant le moteur à rotor noyé (1), l'agencement de passage (12) comportant un élément de conduite (14) et un corps isolant configuré d'un seul tenant (15), et comprenant un élément de retenue (21),
**caractérisé en ce que**
l'agencement de passage (12) comprend au moins un élément de transmission de force (20) agencé entre l'élément de retenue (21) et le boîtier (2), sur lequel l'élément de retenue (21) fixé par des éléments de fixation (22) sur le boîtier (2) exerce une force, que l'élément de transmission de force (20) transmet au boîtier (2) et/ou au corps isolant (15), l'élément de transmission de force (20) étant entièrement intégré dans le corps isolant (15) et, pour la formation d'un renforcement mécanique, étant constitué par un matériau fibreux hautement résistant incorporé dans une matrice.

2. Dispositif selon la revendication 1, **caractérisé en ce que** l'élément de retenue (21) comprend une ouverture de forme tronconique.

3. Dispositif selon l'une quelconque des revendications 1 ou 2, **caractérisé en ce que** le corps isolant (15) est agencé entre un composant (17) et un épaississement (16) de l'élément de conduite (14).

4. Dispositif selon l'une quelconque des revendications 1 à 3, **caractérisé en ce que** l'élément de transmission de force (20) comprend une zone qui est en saillie dans une ouverture de passage (13) dans le boîtier (2).

5. Dispositif selon l'une quelconque des revendications 1 à 4, **caractérisé en ce que** l'élément de transmission de force (20) comprend une zone (29), qui forme une butée pour une ouverture de passage (13) dans le boîtier (2).

6. Dispositif selon l'une quelconque des revendications 1 à 5, **caractérisé en ce que** l'élément de transmission de force (20) entoure une zone pour le passage de l'élément de conduite (14).

7. Dispositif selon l'une quelconque des revendications 1 à 6, **caractérisé en ce que** l'élément de transmission de force (20) comprend une ouverture intérieure, qui est inférieure à un épaississement (16) de l'élément de conduite (14).

8. Dispositif selon l'une quelconque des revendications 1 à 7, **caractérisé en ce que** l'élément de transmission de force (20) est configuré sous forme tronconique.
